# EUROPÄISCHE PATENTANMELDUNG

(11) **EP 1 946 952 A1**
(43) Veröffentlichungstag der Anmeldung: **23.07.2008**
(21) Anmeldenummer: 07000765.3
(22) Anmeldetag: 16.01.2007
(51) Int. Cl.: B60K 7/00

(54) **Antriebseinheit für ein Flurförderfahrzeug**

(71) Anmelder: ABM Greiffenberger Antriebstechnik GmbH, 95615 Marktredwitz (DE)
(72) Erfinder: Schliermann, Jürgen, 92256 Hahnbach (DE)
(74) Vertreter: Tergau & Pohl Patentanwälte

(57) **Zusammenfassung**

Es wird eine Antriebseinheit (1,1') für ein Flurförderfahrzeug angegeben, die einen Fahrmotor (3) mit einer Antriebswelle, ein Laufrad (4) mit einer zur Antriebswelle parallel versetzten Abtriebswelle und ein zwischen der Antriebswelle und der Abtriebswelle angeordnetes erstes Stirnradgetriebe (7) umfasst, wobei der Fahrmotor (3), das Laufrad (4) und das erste Stirnradgetriebe (7) um eine zur Antriebswelle senkrechte Zentralachse (14) gemeinsam schwenkbar an ein Drehlager anordenbar sind. Dabei ist vorgesehen, dass ein seitlich des Fahrmotors (3) angeordneter Lenkmotor (10) mit einer zur Zentralachse (14) parallelen Motorwelle zur Unterstützung oder Betätigung der Schwenkbewegung vorgesehen ist. Die Antriebseinheit (1,1') mit integriertem Lenkantrieb weist eine äußerst kompakte Bauform auf.

## Beschreibung

Die Erfindung betrifft eine Antriebseinheit für ein Flurförderfahrzeug mit einem Fahrmotor mit einer Antriebswelle, mit einem Laufrad mit einer zur Antriebswelle parallel versetzten Abtriebswelle sowie mit einem zwischen der Antriebswelle und der Abtriebswelle angeordneten ersten Stirnradgetriebe, wobei der Fahrmotor, das Laufrad und das erste Stirnradgetriebe um eine zur Antriebswelle senkrechte Zentralachse gemeinsam schwenkbar an einem Drehlager anordenbar sind.

Eine derartige Antriebseinheit ist beispielsweise aus der DE 39 178 31 C1 bekannt und wird insbesondere zum Antrieb und zur Lenkung eines Flurförderfahrzeugs eingesetzt. Dabei werden unter einem Flurförderfahrzeug Fahrzeuge zur Aufnahme, Beförderung und Ablage von Lasten, insbesondere von Paletten verstanden, wie sie beispielsweise in der Lagerhaltung eingesetzt werden. Ein Flurförderfahrzeug ist beispielsweise ein so genannter Kommissionierer, ein Gabelhubwagen oder ein Hubstapler. Eine derartige Antriebseinheit eignet sich aber auch für ein so genanntes Aufsitz-Reinigungsfahrzeug oder dergleichen.

Mit einer Antriebseinheit der vorbeschriebenen Art wird in der Regel ein Laufrad angetrieben, wobei die Lenkung des Flurförderfahrzeugs durch Verschwenken des Laufrads zusammen mit dem Fahrmotor und dem Stirnradgetriebe um eine im Einbau vertikale Zentralachse vorgenommen wird. Die Antriebseinheit ist hierbei über ein Drehlager schwenkbar an das Flurförderfahrzeug montiert. Über das Stirnradgetriebe wird das Antriebsmoment des Fahrmotors auf das Laufrad übertragen. Über die Ausgestaltung des Stirnradgetriebes wird die gewünschte Untersetzung der Rotationsbewegung des Fahrmotors auf das Laufrad erzielt. Die Schwenkung des Laufrades kann beispielsweise mittels einer Deichsel von Hand bei der Bedienung des Flurförderfahrzeugs vorgenommen werden.

Im Unterschied zu der beschriebenen Anordnung ist es beispielsweise aus der EP 1 285 803 A1 bekannt, für eine Antriebseinheit für ein Flurförderfahrzeug einen Fahrmotor vorzusehen, dessen Antriebswelle zur Abtriebswelle des Laufrads senkrecht ausgerichtet ist, wobei das Antriebsmoment vom Fahrmotor mittels eines Kegelradgetriebes auf das Laufrad übertragen wird.

Zur Vereinfachung der Handhabung eines Flurfördertahrzeugs ist es bekannt, einen Lenkmotor zur Unterstützung der Lenkung oder zur alleinigen Lenkdurchführung vorzusehen. Beispielsweise sind dem Prospekt "Power Electronics" der Sauer-Danfoss GmbH, Bestell-Nr. DKMH.PB.750.A1.03/520L0529, Antriebseinheiten für Flurförderfahrzeuge mit verschiedenen Anordnungen von Fahrmotor, Laufrad und Lenkmotor zu entnehmen. So ist eine Antriebseinheit mit einem drehfesten, im Einbauzustand stehenden Fahrmotor dargestellt, wobei zur Schwenkung des Laufrades ein ebenfalls drehfester und stehender Lenkmotor vorgesehen ist. Die Übertragung des Antriebsdrehmoments vom Fahrmotor auf das Laufrad geschieht mittels eines Kegelradgetriebes. Weiter ist eine Antriebseinheit für ein Flurförderfahrzeug dargestellt, wobei der Fahrmotor im Einbauzustand liegend innerhalb der Nabe des Laufrads angeordnet ist. Zur Schwenkung des Laufrads samt liegendem Fahrmotor ist wiederum ein stehender Lenkmotor vorgesehen.

Nachteiligerweise weisen die bekannten Antriebseinheiten, die mit einem Lenkantrieb ausgestattet sind, einen relativ großen Hüllkreis auf, was ungünstig hinsichtlich der gegebenen engen Einbauräume an einem Flurfördenfahrzeug ist. Durch das Vorsehen eines Lenkmotors gemäß der Ausgestaltungen des Standes der Technik wird der Hüllkreis noch vergrößert.

Aufgabe der Erfindung ist es, eine Antriebseinheit für ein Flurfördertahrzeug mit einem Lenkantrieb zur Lenkunterstützung oder zur alleinigen Lenkdurchführung anzugeben, die möglichst wenig Bauraum beansprucht.

Diese Aufgabe wird erfindungsgemäß durch eine Antriebseinheit gemäß der Merkmalskombination des Patentanspruchs 1 gelöst. Dabei ist eine Antriebseinheit mit einem im Einbauzustand liegenden Fahrmotor und mit einem hierzu achsversetzen Laufrad vorgesehen, wobei die Übertragung des Antriebsmoments mittels eines ersten Stirnradgetriebes erfolgt, und wobei der Fahrmotor, das Laufrad und das erste Stirnradgetriebe um eine Zentralachse gemeinsam schwenkbar an einem Drehlager anordenbar sind. Zur Ausbildung des Lenkantriebs ist ein seitlich des Fahrmotors angeordneter Lenkmotor mit einer zur Zentralachse parallelen Motorwelle zur Unterstützung oder Betätigung der Schwenkbewegung vorgesehen.

Die Erfindung geht dabei von der überraschenden Erkenntnis aus, dass eine Antriebseinheit für ein Flurförderfahrzeug, bei welcher die Antriebswelle des Fahrmotors und die Abtriebswelle des Laufrads parallel versetzt angeordnet sind, zwischen den Bauteilen innerhalb des Hüllkreises noch ungenutzten Bauraum zur Anordnung eines Lenkmotors bietet. Dieser Bauraum befindet sich seitlich neben dem im Einbauzustand liegenden Fahrmotor, da das Laufrad und das zur Antriebsmomentübertragung notwendige Stimradgetriebe in der Regel größere Abmessungen aufweisen als der Fahrmotor selbst.

Wird demnach ein Lenkmotor mit einer zur Zentralachse der Schwenkbewegung parallelen Motorwelle seitlich des Fahrmotors angeordnet, so wird ein durch die vorgegebene Anordnung der Antriebseinheit als solcher gegebener Einbauraum genutzt. Ein zusätzlicher Bauraum außerhalb des durch den Fahrmotor, das Laufrad und das Stirnradgetriebe vorgegebenen Hüllkreises wird nicht oder nur unwesentlich benötigt.

Insgesamt wird somit eine Antriebseinheit mit einem Lenkantrieb oder einer Lenkhilfe geschaffen, die ohne eine bauliche Änderung am Flurförderfahrzeug selbst in dieses integriert werden kann. Zusätzliche Bauraum schaffende Maßnahmen am Flurförderfahrzeug sind nicht notwendig.

Die Unterstützung oder alleinige Betätigung der Schwenkbewegung kann bei Antrieb des Lenkmotors über verschiedene mechanische Kopplungen erfolgen. Beispielsweise kann die Übertragung des Lenkmoments zur Schwenkbewegung mittels eines Riemen-, Ketten-, Zahnstangen- oder Zahnradantriebs erfolgen.

Grundsätzlich kann bei der gegebenen Anordnung von Fahrmotor, Laufrad und Stirnradgetriebe der Lenkmotor sowohl feststehend als auch beweglich ausgebildet sein. Um keinen zusätzlichen Bauraum zu benötigen, ist es jedoch vorteilhaft, wenn der Lenkmotor mit dem Fahrmotor, dem Laufrad und dem ersten Stirnradgetriebe schwenkbar an dem Drehlager anordenbar und zum Erzeugen der Schwenkbewegung gegenüber einem drehfesten Kopplungselement ausgebildet ist. Bei einer derartigen Anordnung dreht sich die Antriebseinheit samt Lenkmotor als eine Baueinheit gegenüber dem Flurförderfahrzeug, an welchem die Antriebseinheit über das Drehlager schwenkbar befestigt ist. Mit anderen Worten treibt der Lenkmotor bei Bestromung seine eigene Schwenkbewegung mit an. Das drehfeste Kopplungselement dient der Abstützung des Lenkmoments beispielsweise an einem Antriebsträger oder an einem Rahmen und damit gegenüber dem Flurförderfahrzeug. Dies kann beispielsweise mittels einer Zahnradstufe, durch einen Riemen- oder durch einen Kettenantrieb geschehen.

Zur drehbaren Lagerung der Antriebseinheit kann diese beispielsweise an einem Innenring eines als Drehkranz ausgebildeten Drehlagers befestigt sein, wobei der Innenring drehbar gegenüber einem Außenring gelagert ist, und wobei der Außenring drehfest insbesondere an einer Plattform des Flurförderfahrzeugs befestigt ist.

Vorteilhafterweise ist im Einbauzustand der Antriebseinheit der Fahrmotor zwischen dem Drehlager und dem Laufrad angeordnet. Diese Ausgestaltung bietet den Vorteil eines relativ geringen Hüllkreises der Anordnung, da der Fahrmotor und das Laufrad in Projektion übereinanderliegend angeordnet sind. Das erste Stirnradgetriebe kann hierzu entsprechend flach ausgestaltet werden.

In einer bevorzugten weiteren Ausgestaltung ist der Fahrmotor, das Laufrad und das Stirnradgetriebe sowie insbesondere der Lenkmotor zu einer Anordnung unterhalb des Drehlagers ausgebildet. Diese Ausgestaltung bietet den Vorteil, dass oberhalb des Drehlagers, d.h. auf der Plattform des Flurförderfahrzeugs, weder durch den Fahrmotor noch durch den zusätzlichen Lenkmotor weiterer Bauraum beansprucht wird. Die gesamte Antriebseinheit befindet sich somit unterhalb des Drehlagers, wobei der Lenkmotor zur Unterstützung oder Durchführung der Schwenkbewegung um die Zentralachse des Drehlagers ausgebildet ist. Mit anderen Worten bildet die Antriebseinheit insgesamt eine kompakte Baueinheit, die als ganzes leicht unterhalb der Plattform des Flurförderfahrzeugs montierbar ist.

In einer weiteren vorteilhaften Ausgestaltung der Antriebseinheit ist zwischen der Motorwelle des Lenkmotors und dem Kopplungselement ein insbesondere mehrstufiges zweites Stirnradgetriebe mit zur Zentralachse parallelen Getriebeachsen angeordnet. Ein solches Stimradgetriebe bietet bei der zur Lenkung notwendigen Untersetzung der Rotationsbewegung des Lenkmotors gegenüber anderen Getriebearten, wie beispielsweise einem integrierten Planetengetriebe, einen höheren Wirkungsgrad. Gegenüber einem Ketten- oder Riemenantrieb ist ein als eine Baueinheit ausgeführtes Stirnradgetriebe leichter zu montieren. Die Getriebeteile sind zudem sicher vor einer Verschmutzung geschützt. Zudem weist ein Stirnradgetriebe aufgrund der parallelen Getriebeachsen eine kompakte, flache Bauform auf, was hinsichtlich des geringen zur Verfügung stehenden Einbauraums günstig ist.

In einer günstigen Anordnungsvariante ist das zweite Stirnradgetriebe im Wesentlichen längs und bezüglich des Laufrads oberhalb der Antriebswelle des Fahrmotors angeordnet. Dabei wird überraschend erkannt, dass durch den im Einbauzustand liegenden Fahrmotor sich aufgrund seiner in der Regel zylindrischen Außenform ein längs der Antriebswelle und oberhalb dieser erstreckender, frei verfügbarer Bauraum befindet, in welchen sich das zweite Stirnradgetriebe integrieren lässt.

Zweckmäßigerweise umfasst das zweite Stirnradgetriebe als eine erste Stufe ein auf der Motorwelle angeordnetes Antriebsritzel und ein erstes Rad und als eine zweite Stufe ein zweites Ritzel und ein zweites Rad, wobei das zweite Rad ein auf das Kopplungselement wirkendes Abtriebsritzel treibt. Auf diese Weise ist eine Adaption des Lenkantriebs an verschiedene Grundrotationsgeschwindigkeiten unterschiedlicher Lenkmotoren möglich. Über die Zahnung und den Durchmesser der Ritzel und Räder kann die Rotation der Motorwelle des Lenkmotors auf eine für die Lenkung gewünschte Geschwindigkeit untersetzt werden. Insbesondere kann hierzu vorgesehen sein, das erste Rad und das zweite Ritzel auf einer gemeinsamen Welle anzuordnen und das Abtriebsritzel dem zweiten Rad aufzusetzen.

Der Fahrmotor und das Laufrad sind durch ein gemeinsames Gehäuse gehalten, welches idealerweise gleichzeitig als Lagerschale für die Getriebeelemente des ersten Stirnradgetriebes dient. Das zweite Stirnradgetriebe kann als ein separates Gehäuse angebaut werden. In einer vorteilhaften Ausgestaltung ist das zweite Stirnradgetriebe jedoch in das das erste Stirnradgetriebe tragende Gehäuse aufgenommen. Somit umfasst dieses Gehäuse sowohl die Lagerstellen für das erste als auch für das zweite Stirnradgetriebe, wobei die Getriebeachsen beider Stimradgetriebe zueinander senkrecht stehen.

Die Anbringung des zweiten Stirnrad- oder Lenkgetriebes ist durch den Anbau eines separaten Gehäuses vorstellbar. In einer bevorzugten Ausgestaltung der Antriebseinheit sind der Lenkmotor und das erste Stirnradgetriebe aber ebenfalls in einem gemeinsamen Gehäuse angeordnet. Besonders zweckmäßig ist es hierbei, beide Stirnradgetriebe und den Lenkmotor in ein gemeinsames Getriebegehäuse zu integrieren, wobei dieses Gehäuse gleichzeitig für die Lagerung des Laufrads und des Fahrmotors ausgebildet ist. Diese Ausführungsvariante erlaubt eine besonders kompakte Bauart, wobei der Lenkantrieb und der Fahrantrieb eine Einheit darstellen. Somit ist die komplette Antriebseinheit in einfacher Art und Weise einschließlich Lagerung an ein Flurförderfahrzeug zu montieren.

Wie erwähnt kann das Kopplungselement, an dem sich der Lenkmotor zur Durchführung oder Unterstützung einer Schwenkbewegung der Antriebseinheit abstützt, in verschiedenster Art und Weise ausgebildet sein. In einer zweckmäßigen Ausgestaltung ist das Kopplungselement als ein Zahnkranz ausgebildet, in dessen Zahnung das Abtriebsritzel des Lenkmotors oder des zweiten Stirnradgetriebes eingreift. Der Zahnkranz ist dabei drehfest und koaxial zur Zentralachse, beispielsweise an der Plattform des Flurförderfahrzeugs, zu montieren. Bei einer Bestromung des Lenkmotors rollt sich somit das Antriebsritzel am Umfang des Zahnkranzes ab, wobei die gesamte Antriebseinheit um die Zentralachse zur Durchführung einer Lenkung geschwenkt wird.

In einer besonders kompakten Ausgestaltung ist die Antriebseinheit derart ausgestaltet, dass der Lenkmotor und das zweite Stirnradgetriebe innerhalb eines durch das Laufrad, den Fahrmotor und das erste Stirnradgetriebe bei Rotation um die Zentralachse vorgegebenen Hüllkreis liegen. Bei einer derartigen Ausgestaltung wird der durch die Antriebseinheit ohne Lenkung vorgegebene Bauraum zur Anordnung des Lenkmotors und des zweiten Stirnradgetriebes genutzt, ohne dass deren Außenabmessungen den vorgegebenen Hüllkreis überschreiten.

Ausführungsbeispiele der Erfindung werden anhand einer Zeichnung näher erläutert. Dabei zeigen jeweils in perspektivischer Darstellung:
- Fig. 1: eine erste Antriebseinheit mit einem zum Laufrad achsversetzt angeordneten Fahrmotor,
- Fig. 2: die Antriebseinheit gemäß Fig. 1 aus einem anderen Blickwinkel und
- Fig. 3: eine auf den Lenkantrieb reduzierte weitere Antriebseinheit für ein Flurförderfahrzeug.

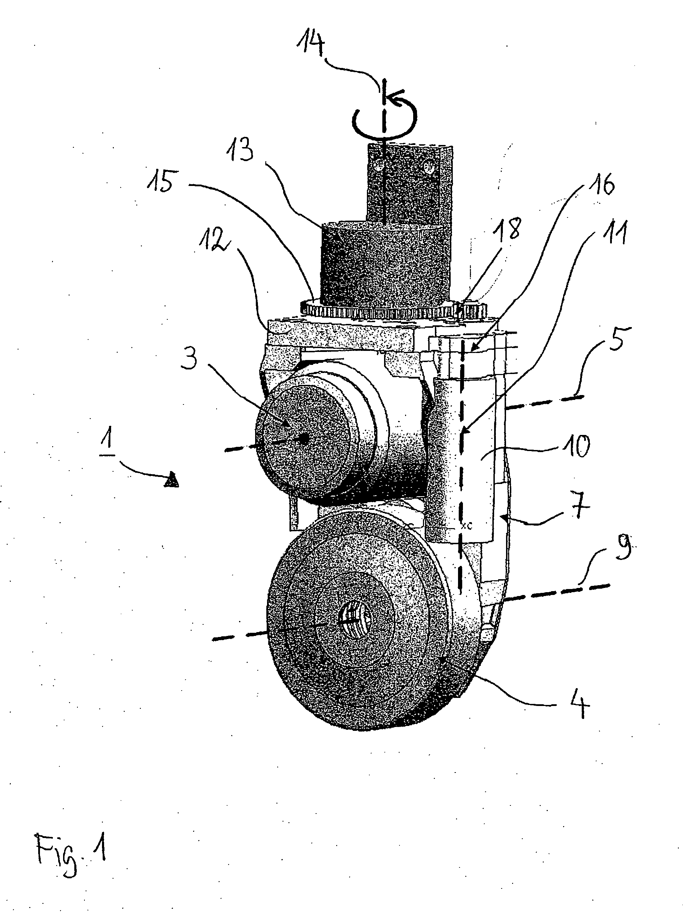

In Fig. 1 ist eine Antriebseinheit 1 für ein Flurförderfahrzeug schematisch dargestellt. Die Antriebseinheit 1 umfasst hierbei einen im Einbauzustand liegend angeordneten Fahrmotor 3 sowie ein sich im Einbauzustand um eine horizontale Drehachse drehbares Laufrad 4. Der Fahrmotor 3 weist eine nicht sichtbare entlang der Linie 5 ausgerichtete horizontale Antriebswelle auf, deren Antriebsmoment mittels eines ersten Stirnradgetriebes 7 über eine ebenfalls horizontale Abtriebswelle auf das Laufrad 4 übertragen wird. Die in Fig. 1 nicht sichtbare Abtriebswelle des Laufrads 4 ist entlang der eingezeichneten Linie 9 ausgerichtet. Der Fahrmotor 3 und das Laufrad 4 sind zueinander achsversetzt angeordnet, wobei zwischen der Antriebswelle des Fahrmotors 3 und der Abtriebswelle des Laufrads 4 das Stirnradgetriebe 7 angeordnet ist.

Der Fahrmotor 3 und das Laufrad 4 sind an einem gemeinsamen Gehäuse gelagert, welches gleichzeitig die Lagerschale für die Getriebeteile des ersten Stirnradgetriebes 7 bildet. Seitlich des Fahrmotors 3 und oberhalb des Laufrades 4 ist ein elektrischer Lenkmotor 10 angeordnet, dessen Antriebswelle entlang der eingezeichneten vertikalen Linie 11 und somit senkrecht zur Antriebswelle des Fahrmotors 3 ausgerichtet ist. Der Lenkmotor 10 ist dabei an dem bereits den Fahrmotor 3 und das Laufrad 4 sowie das erste Stirnradgetriebe 7 tragenden Gehäuse befestigt, wodurch insgesamt eine einheitliche und kompakte Baueinheit entsteht.

Die gesamte Baueinheit aus Fahrmotor 3, Laufrad 4, erstem Stirnradgetriebe 7 und Lenkmotor 10 ist mittels eines Flansches 12, der gleichzeitig einen Getriebedeckel bilden kann, gegenüber einem Antriebsträger 13 mittels eines nicht dargestellten Drehlagers um eine Zentralachse 14 schwenkbar gelagert. An dem Antriebsträger 13 ist zur Abstützung des Lenkmoments ein Zahnkranz 15 drehfest montiert.

Zur Unterstützung oder zur alleinigen Durchführung der Schwenkbewegung wirkt die entlang der Linie 11 ausgerichtete Motorwelle des Lenkmotors 10 auf ein zweites Stirnradgetriebe 16, welches abtriebsseitig ein Abtriebsritzel 18 umfasst. Das Abtriebsritzel 18 kämmt mit der Außenverzahnung des drehfest montierten Zahnkranzes 15, so dass bei einer Bestromung des Lenkmotors 10 die gesamte Baueinheit einschließlich des Lenkmotors 10 selbst um die Zentralachse 14 verschwenkt wird.

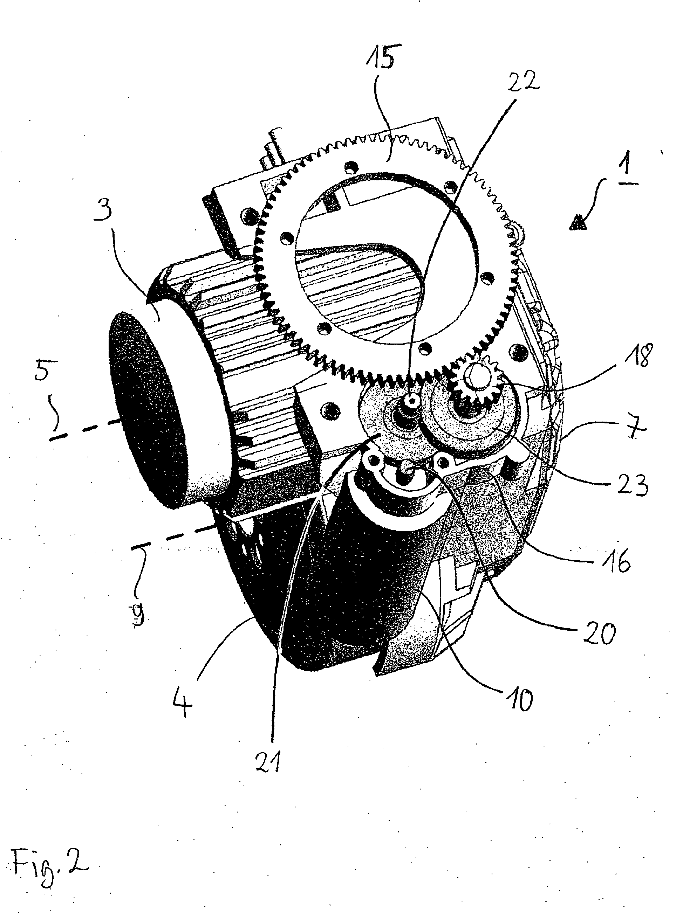

Fig. 2 zeigt die Antriebseinheit 1 gemäß Fig. 1 aus einem anderen Blickwinkel. Dabei sind der Antriebseinheit 1 gegenüber Fig. 1 der Flansch 12, der gleichzeitig als Getriebedeckel für das zweite Stirnradgetriebe 16 wirkt, abgenommen. Weiter ist der Antriebsträger 13 gemäß Fig. 1 nicht dargestellt.

Durch die Entfernung des Flansches 12 ist nunmehr eine freie Sicht auf das zweite Stirnradgetriebe 16 gegeben. Man erkennt, dass das zweite Stirnradgetriebe 16 zu der entlang der Linie 5 ausgerichteten Antriebswelle des Antriebsmotors 3 senkrecht ausgerichtete Getriebeachsen aufweist. Im Einzelnen umfasst das zweite Stirnradgetriebe 16 als eine erste Stufe ein auf der Motorwelle des Lenkmotors 10 aufgepresstes Antriebsritzel 20, welches ein erstes Rad 21 treibt. Als eine zweite Stufe umfasst das zweite Stirnradgetriebe 16 ein auf einer mit dem ersten Rad 21 gemeinsamen Welle angeordnetes zweites Ritzel 22, welches ein zweites Rad 23 antreibt. Auf einer mit dem zweiten Rad 23 gemeinsamen Welle ist schließlich das Abtriebsritzel 18 aufgebracht, welches mit der Außenverzahnung des drehfestem Zahnkranzes 18 kämmt.

Die weiteren in Fig. 2 dargestellten Bauteile entsprechen denen gemäß Fig. 1.

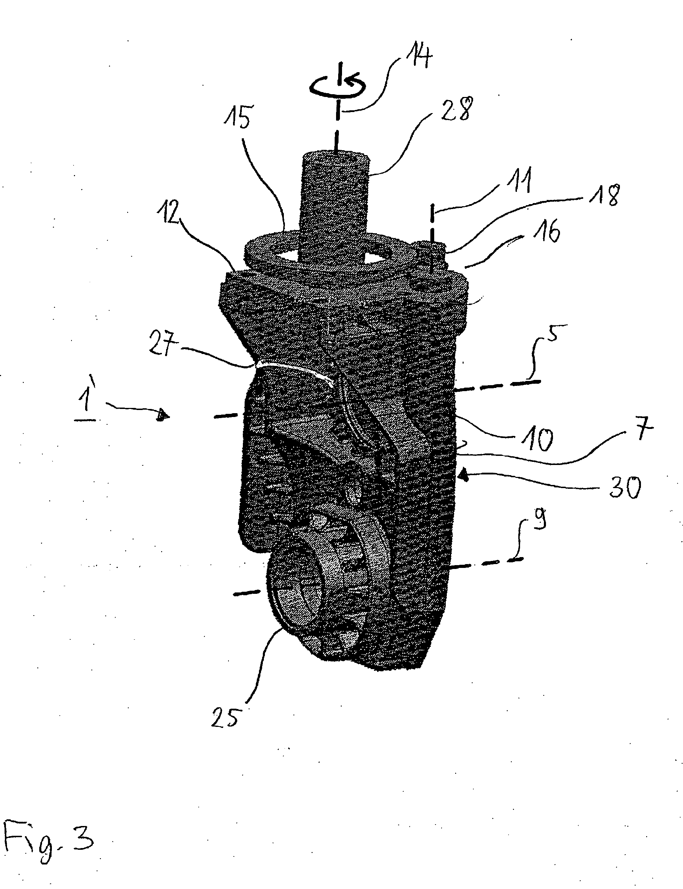

In Fig. 3 ist eine baulich gegenüber den Fig. 1 und 2 abgeänderte weitere Antriebseinheit 1' für ein Flurförderfahrzeug dargestellt. Die Antriebseinheit 1' gemäß Fig. 3 ist hierbei zur besseren Übersicht bauteilreduziert dargestellt. Es ist weder der Fahrmotor noch das Laufrad eingezeichnet.

Man erkennt deutlich, dass das Gehäuse 30 eine Radnabe 25 zur Lagerung des Laufrads und eine Lagerschale 27 zur Aufnahme des Fahrmotors aufweist und gleichzeitig die Lagerstellen für das die Antriebswelle des Fahrmotors mit der Abtriebswelle des Laufrads verbindende erste Stirnradgetriebe 7 ausbildet. Zur Verdeutlichung der Ausrichtung der Antriebswelle des Fahrmotors und der Abtriebswelle des Laufrads sind wiederum die gestrichelten Linien 5 bzw. 9 eingezeichnet.

In das Gehäuse 30 ist weiter der Lenkmotor 10 integriert. Für das zweite Stimradgetriebe 16 weist das Gehäuse 30 entsprechende Lagerstellen auf. Über den Befestigungsflansch 12 ist die gesamte Antriebseinheit 1' mittels eines entsprechenden Aufnahmeelements 28 an einem Innenring eines Drehlagers befestigbar. Zur Unterstützung oder Durchführung einer Lenkbewegung um die Zentralachse 14 ist wiederum ein drehfester Zahnkranz 15 vorgesehen, in welchem das Abtriebsritzel 18 des zweiten Stirnradgetriebes eingreift.

Wie sowohl aus Fig. 3 als auch aus Fig. 2 ersichtlich wird, sind die dargestellten Antriebseinheiten 1 und 1' mit einem Lenkmotor 10 und einem zweiten Stirnradgetriebe 16 zur Übertragung des Lenkmotors 10 derart ausgestattet, dass der durch das Laufrad 4, den Fahrmotor 3 und das erste Stirnradgetriebe 7 bei Rotation um die Zentralachse 14 vorgegebene Hüllkreis nicht vergrößert ist. Eine derartige Anordnung stellt eine äußerst kompakte Baueinheit dar, die leicht ohne Beanspruchung zusätzlichen Bauraums in den vorgegebenen Bauraum eines Flurförderfahrzeugs eingesetzt werden kann. Dadurch, dass die Bauteile der dargestellten Antriebseinheiten 1 und 1' unterhalb des zur Montage an einer Plattform des Flurförderfahrzeugs vorgesehenen Drehlagers angeordnet sind, wird auch auf der Plattform des Flurförderfahrzeugs kein zusätzlicher Bauraum beansprucht.

### Bezugszeichenliste

- 1,1': Antriebseinheit
- 3: Fahrmotor
- 4: Laufrad
- 5: Linie (Lage der Antriebswelle)
- 7: erstes Stimradgetriebe
- 9: Linie (Lage der Abtriebswelle)
- 10: Lenkmotor
- 11: Linie (Lage der Motorwelle)
- 12: Flansch
- 13: Antriebsträger
- 14: Zentralachse
- 15: Zahnkranz
- 16: zweites Stirnradgetriebe
- 18: Abtriebsritzel
- 20: Antriebsritzel
- 21: erstes Rad
- 22: zweites Ritzel
- 23: zweites Rad
- 25: Radnabe
- 27: Lagerschale
- 28: Aufnahmeelement
- 30: Gehäuse

## Patentansprüche

1. Antriebseinheit (1,1') für ein Flurförderfahrzeug, mit einem Fahrmotor (3) mit einer Antriebswelle, mit einem Laufrad (4) mit einer zur Antriebswelle parallel versetzten Abtriebswelle sowie mit einem zwischen der Antriebswelle und der Abtriebswelle angeordneten ersten Stirnradgetriebe (7), wobei der Fahrmotor (3), das Laufrad (4) und das erste Stirnradgetriebe (7) um eine zur Antriebswelle senkrechte Zentralachse (14) gemeinsam schwenkbar an einem Drehlager anordenbar sind,
**dadurch gekennzeichnet,**
**dass** ein seitlich des Fahrmotors (3) angeordneter Lenkmotor (10) mit einer zur Zentralachse (14) parallelen Motorwelle zur Unterstützung oder Betätigung der Schwenkbewegung vorgesehen ist.

2. Antriebseinheit (1,1') nach Anspruch 1,
**dadurch gekennzeichnet,**
**dass** der Lenkmotor (10) mit dem Fahrmotor (3), dem Laufrad (4) und dem ersten Stirnradgetriebe (7) schwenkbar an dem Drehlager anordenbar ist und zum Erzeugen der Schwenkbewegung gegenüber einem drehfesten Kopplungselement ausgebildet ist.

3. Antriebseinheit nach Anspruch 1 oder 2,
**dadurch gekennzeichnet,**
**dass** im Einbauzustand der Fahrmotor (3) zwischen dem Drehlager und dem Laufrad (4) angeordnet ist.

4. Antriebseinheit (1,1') nach einem der vorherigen Ansprüche,
**dadurch gekennzeichnet,**
**dass** der Fahrmotor (3), das Laufrad (4) und das Stirnradgetriebe (7) sowie insbesondere der Lenkmotor (10) zu einer Anordnung unterhalb des Drehlagers ausgebildet sind.

5. Antriebseinheit (1,1') nach Anspruch 4,
**dadurch gekennzeichnet,**
**dass** zwischen der Motorwelle des Lenkmotors (10) und dem Kopplungselement ein, insbesondere mehrstufiges, zweites Stirnradgetriebe (16) mit zur Zentralachse (14) parallelen Getriebeachsen angeordnet ist.

6. Antriebseinheit (1,1') nach Anspruch 5,
**dadurch gekennzeichnet,**
**dass** das zweite Stirnradgetriebe (16) im Wesentlichen bezüglich des Laufrads (4) oberhalb und längs der Antriebswelle angeordnet ist.

7. Antriebseinheit (1,1') nach Anspruch 5 oder 6,
**dadurch gekennzeichnet,**
**dass** das zweite Stimradgetriebe (16) als eine erste Stufe ein auf der Motorwelle angeordnetes Antriebsritzel (20) und ein erstes Rad (21) und als eine zweite Stufe ein zweites Ritzel (22) und ein zweites Rad (23) umfasst, wobei das zweite Rad (23) ein auf das Kopplungselement wirkendes Abtriebsritzel (18) treibt.

8. Antriebseinheit (1,1') nach einem der Ansprüche 5 bis 7,
**dadurch gekennzeichnet,**
**dass** das erste und das zweite Stirnradgetriebe (7,16) in einem gemeinsamen Gehäuse (30) angeordnet sind.

9. Antriebseinheit (1,1') nach einem der vorhergehenden Ansprüche,
**dadurch gekennzeichnet,**
**dass** der Lenkmotor (10) und das erste Stimradgetriebe (7) in einem gemeinsamen Gehäuse (30) angeordnet sind.

10. Antriebseinheit (1,1') nach einem der Ansprüche 2 bis 9,
**dadurch gekennzeichnet,**
**dass** das Kopplungselement ein Zahnkranz (15) ist.

11. Antriebseinheit (1,1') nach einem der Ansprüche 2 bis 10,
**dadurch gekennzeichnet,**
**dass** der Lenkmotor (10) und das zweite Stirnradgetriebe (16) innerhalb eines durch das Laufrad (4), den Fahrmotor (3) und das erste Stirnradgetriebe (7) bei Rotation um die Zentralachse (14) vorgegebenen Hüllkreis liegen.
